**Europäisches Patentamt**

**European Patent Office**

**Office européen des brevets**

(11) Veröffentlichungsnummer : **0 143 278**
**B1**

(12) **EUROPÄISCHE PATENTSCHRIFT**

(45) Veröffentlichungstag der Patentschrift :
**13.04.88**

(51) Int. Cl.⁴ : **B 29 C 49/38** / B29L23:18

(21) Anmeldenummer : **84111835.9**

(22) Anmeldetag : **03.10.84**

(54) Vorrichtung zum Herstellen von Kunststoffrohren.

(30) Priorität : **03.10.83 DE 3335850**

(43) Veröffentlichungstag der Anmeldung :
**05.06.85 Patentblatt 85/23**

(45) Bekanntmachung des Hinweises auf die Patenterteilung : **13.04.88 Patentblatt 88/15**

(84) Benannte Vertragsstaaten :
**FR IT**

(56) Entgegenhaltungen :
**EP-A- 0 048 113**
**DE-B- 1 116 180**

(73) Patentinhaber : **Fränkische Rohrwerke Gebr. Kirchner GmbH & Co.**
**Hellingerstrasse 206 Postfach 40**
**D-8729 Königsberg/ Bayern (DE)**

(72) Erfinder : **Korn, Günther**
**Unfinden 47C**
**D-8729 Königsberg/Bayern (DE)**

(74) Vertreter : **Schwabe, Hans-Georg, Dipl.-Ing. et al**
**Patentanwälte Schwabe, Sandmair, Marx Stuntzstrasse 16**
**D-8000 München 80 (DE)**

## Beschreibung

Die Erfindung betrifft eine Vorrichtung zum Herstellen von Kunststoffrohren gemäß dem Oberbegriff des Anspruchs 1.

Bei einer Vorrichtung zum Herstellen insbesondere quergerillter Kunststoffrohre sind zwei jeweils in einer Endlosbahn umlaufende Folgen von Matrizenhälften vorgesehen. Die Bahnen grenzen längs einer Arbeitsstrecke aneinander derart an, daß einander gegenüberliegende Matrizenhälften der beiden Bahnen jeweils eine fortlaufende Hohlform für ein solches Rohr bilden. In diese fortlaufende Hohlform wird das noch plastische Rohr hineinextrudiert und durch Herstellen eines Druckgefälles zwischen dem Inneren des Rohres und dessen Außenseite formend an die Matrizenwandungen angelegt. Dieses Rohr bewegt sich gemeinsam mit den beiden Matrizenfolgen, bis es hinlänglich abgekühlt und somit verfestigt ist und die beiden Matrizenfolgen beim Zurücklegen ihrer Endlosbahn wieder auseinanderlaufen.

Eine Vorrichtung mit den Merkmalen des Anspruchs 1 ist aus der DE-OS 31 18 932 bekannt.

Diese Vorrichtung dient zur Herstellung von Kunststoffrohren mit unterschiedlichen Durchmessern. Zu diesem Zweck sind die Halbmatrizenfolgen auswechselbar. Soll also von der Herstellung eines Kunststoffrohrtyps auf einen anderen Kunststoffrohrtyp übergegangen werden, muß die Maschine stillgesetzt werden ; die zu Ketten zusammengeschlossenen Halbmatrizenfolgen müssen ausgebaut werden. Dann müssen zwei neue Halbmatrizenketten in die Maschine eingebaut werden. Nun kann mit den neuen Halbmatrizenketten auch ein anderes Kunststoffrohr gefertigt werden.

Da bei der bekannten Maschine mit äußerem Unterdruck gearbeitet wird, muß der noch warmplastische Kunststoffschlauch der wandernden Hohlform frei durch die Luft zugeführt werden, so daß er in diesem Bereich mehr oder weniger durchhängen kann. Um diesen von der Abmessung des Schlauches und den Betriebsparametern abhängigen Durchhang ausgleichen zu können und um ferner Abweichungen der Lage der Formkanalmitte in der Trennfuge der wandernden Hohlform ebenfalls ausgleichen zu können, ist bei der bekannten Vorrichtung für den Tisch, auf welchem die beiden Halbmatrizenfolgen umlaufen, eine Feinverstelleinrichtung vorgesehen, um die Lage des Formkanals relativ zur Extrusionsdüse einzustellen. Diese Maßnahme dient lediglich zur genauen Einstellung der jeweils verwendeten Matrizenhälften auf die Extrusionsdüse, da diese jeweils mit nur einem Formkanal versehenen Matrizenhälften ihrerseits austauschbar sind und bei ausgetauschten Matrizenhälften manchmal eine Feineinstellung ihrer Lage gegenüber der Extrusionsdüse notwendig wird.

Ferner ist aus der EP-Anmeldung 48 113 eine Vorrichtung zum Herstellen von Rohren bekannt, die in wahlweise unterschiedlichen Abständen Abschnitte mit unterschiedlicher Formgebung aufweisen. Zu diesem Zweck sind die Matrizenhälften mit mehreren, zueinander parallel verlaufenden, unterschiedlichen Formkanälen versehen. Diese Matrizenhälften sind quer zur Längsrichtung einer sie tragenden Kette verschiebbar. Steuerschieber für die Verschiebelage laufen in Führungsschienen um, die mit Weichen versehen sind. Es ist somit mit der bekannten Vorrichtung möglich, durch Ansteuern der komplizierten Weichenanordnung im laufenden Extrusionsvorgang von einer Form des gerade hergestellten Rohres auf eine andere überzugehen. Somit ist es mit der bekannten Vorrichtung möglich, Rohre mit unterschiedlich geformten Abschnitten kontinuierlich durch Extrusion herzustellen.

Obwohl die bekannte Vorrichtung nur dazu bestimmt ist, Rohre z. B. mit Endmuffen herzustellen, scheint es im Prinzip auch möglich, mit dieser Vorrichtung Endlosrohre unterschiedlicher Art herzustellen. Für diese Endlosrohre stehen dann mehrere unterschiedliche Formen zur Verfügung, so daß es beim Umstellen der Produktion von einer Rohrform auf eine andere nicht erforderlich ist, alle Matrizenhälften auszuwechseln, sondern es genügt ein Umschaltvorgang.

Die Produktionsumstellung erfolgt allerdings verhältnismäßig selten, so daß der durch die bekannte Vorrichtung erzielte Zeitgewinn nicht in wirtschaftlicher Relation zu den erheblichen Anschaffungskosten und der Verschleißanfälligkeit der sehr komplizierten, gattungsbildenden Vorrichtung steht. Außerdem sind die vielen, erforderlichen Schaltglieder infolge ihrer hohen thermischen und mechanischen Belastung störanfällig.

Die Erfindung löst gegenüber der gattungsbildenden Vorveröffentlichung die Aufgabe, den baulichen Aufwand und auch den Zeitaufwand für die Umstellbarkeit von einer Rohrabmessung auf eine andere Rohrabmessung drastisch zu verringern. Die Erfindung löst diese Aufgabe durch die Weiterbildung gemäß dem kennzeichnenden Merkmal des Anspruchs 1. Dadurch, daß in einem Satz von zwei Halmatrizenfolgen mehrere, z. B. drei, parallele Formkanäle vorgesehen sind, können mit einem einzigen Satz von Halbmatrizen drei unterschiedliche Rohre gefertigt werden. Dadurch wird der Aufwand für die Maschine außerordentlich reduziert, da die Halbmatrizensätze den mit Abstand aufwendigsten Teil des Formgebungswerkzeuges bilden. Ferner wird aber auch die Umstellung von einer Rohrabmessung auf eine andere Rohrabmessung drastisch verringert, da es genügt, für diesen Zweck den Extruder kurzfristig anzuschalten und in einem, nur wenige Sekunden dauernden Vorgang das Formwerkzeug in der Höhe mittels des entsprechenden Verstellmechanismus so zu verschieben, daß die gewünschte Hohlform sich nun vor der Extrusionsdüse befindet.

Hierbei werden bei einer Umstellung der Vorrichtung also weder die Matrizenfolgen komplett ausgewechselt, noch die einzelnen, gesonderten Matrizenhälften in ihrer Relativlage zu einer sie tragenden Kette verschoben, welche ihrerseits gegenüber der Extrusionsdüse ortsfest umläuft, sondern die Führungsmittel können mit Rahmen und Antrieb relativ zur Extrusionsdüse solche unterschiedliche Positionen einnehmen, daß jeweils der gewünschte Formkanal der mehrere Formkanäle bildenden Matrizenfolgen vor der Extrusionsdüse liegt. Dieser scheinbar aufwendige Weg ist überraschenderweise weit einfacher als die Ausbildungen nach dem Stand der Technik.

Die in ihrer Gesamtheit gegenüber der Extrusionsdüse verstellbaren Führungsmittel sind z. B. aus Ketten, Kanälen u. dgl. gebildet und weisen einen Antrieb mit Umlenkrädern usw. auf. Eine Verschiebbarkeit der Matrizenhälften quer zu ihrer Umlaufebene relativ zu den Führungsmitteln ins daher nicht erforderlich.

Der die Führungsmittel tragende Rahmen kann in praktisch jeder Lage der Umlaufebene der Matrizenfolgen durch eine geeignete Stelleneinrichtung ohne weiteres und mit geringem maschinellen Aufwand verstellt werden.

Es ist im Prinzip möglich, den genannten Rahmen frei verstellbar anzuordnen, so daß beim Produktionsübergang von einer Rohrform auf eine andere jeweils die richtige Lagezuordnung von Formkanal und Extrusionsdüse eingestellt werden kann. Gemäß einer Ausgestaltung der Erfindung wird die Umstellung des Fertigungsvorganges aber noch dadurch weiter vereinfacht und erleichtert, daß jedem der von den Matrizenfolgen gebildeten Formkanäle ein Endanschlag zugeordnet ist, der am Rahmen oder an dem diesen tragenden, ortsfesten Untergestell angebracht ist und es gestattet, daß jede der Positionen des Rahmens einfach und ohne zusätzliche Einstellarbeit angefahren werden kann. Dadurch erfolgt die Umstellung des Fertigungsvorganges nicht nur besonders schnell, sondern kann von ungeübtem Personal ohne weiteres durchgeführt werden. Insoweit ist die Ausbildung gemäß Anspruch 2 besonders vorteilhaft.

Selbstverständlich können auch bei der Erfindung die Mehrfach-Matrizenfolgen ihrerseits austauschbar sein.

Im Falle austauschbarer Matrizenfolgen ist es ferner von Vorteil, daß gemäß Anspruch 3 die Endanschläge ihrerseits einstellbar sind, so daß die Anpassung an die jeweils eingesetzten Matrizenhälften möglich ist.

Die Anzahl der Formkanäle in den Matrizenfolgen ist in weiten Grenzen wählbar, und zwar zumal dann, wenn als Führungsmittel ein Führungskanal verwendet wird, der geeignet ist, auch sehr hohe Matrizenhälften sauber zu führen. Angesichts des zur Kühlung der Matrizenhälfte erforderlichen Aufwandes sind gemäß Anspruch 4 Matrizenhälften mit zwei bis fünf Formkanälen bevorzugt.

Bei der gattungsbildenden Vorrichtung erfolgt das Einstellen des die Führungsmittel tragenden Rahmens durch einen Antrieb mittels eines aufsteckbaren Sechskantschlüssels. Im Gegensatz hierzu ist gemäß einer weiteren Ausgestaltung der Erfindung nach Anspruch 5 ein Kraftantrieb zum Einstellen der Positionen der Führungsmittel bzw. des Rahmens vorgesehen, wodurch die Umstellarbeit vereinfacht und beschleunigt wird. Dieser Kraftantrieb kann beispielsweise durch einen pneumatischen oder hydraulischen Hubzylinder erfolgen, der an dem in Verstellrichtung geführten Rahmen angreift. Es ist aber auch, wie bei der bekannten Vorrichtung möglich, den Rahmen auf mehreren — bevorzugt vier — Schraubenspindeln zu lagern und diese zur gemeinsamen Drehung zu koppeln. Es ist auch möglich, eine einzige motorgetriebene Hubspindel zu verwenden, die ein am Rahmen angelenktes Hebelgetriebe verstellt.

Die Endanschläge können durch ablesbare Markierungen oder eine geeignete Kodierung in einem Antriebs-Steuergerät ersetzt werden. Bevorzugt sind jedoch gemäß Anspruch 6 die Endanschläge mit dem Kraftantrieb derart gekoppelt, daß sie den Kraftantrieb beim Erreichen einer gewünschten Position selbsttätig ausschalten. Besonders geeignet sind hierbei Mikroschalter, die beim Passieren eines relativ zu ihnen beweglichen Anschlages den Hubmotor stillsetzen.

Der Gegenstand der Erfindung wird anhand der beigefügten, schematischen Zeichnung beispielsweise noch näher erläutert.

In dieser zeigt :

Fig. 1 eine stark schematisierte Schrägansicht der erfindungsgemäßen Vorrichtung ;

Fig. 2 die Ansicht zweier zugehöriger Matrizenhälften, in Extrusionsrichtung gesehen, und

Fig. 3 die schematische Darstellung eines Hubantriebs für die in Fig. 1 gezeigte Ausführungsform der erfindungsgemäßen Vorrichtung.

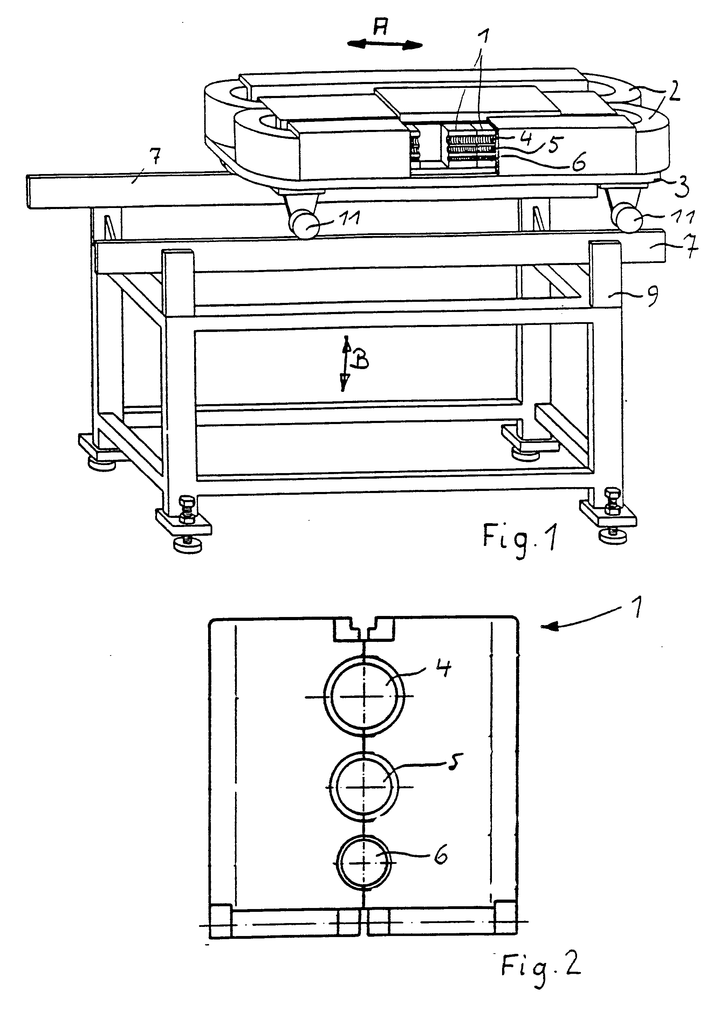

In Fig. 1 ist schematisch die Gesamtanordnung einer Ausführungsform der erfindungsgemäßen Vorrichtung gezeigt.

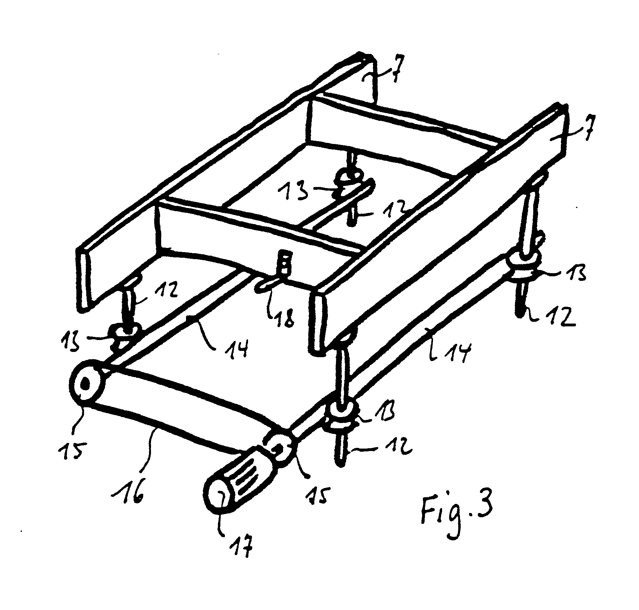

Auf einem festen Sockel 9 ruht senkrecht zur Umlaufebene der Matrizenhälften, also hier in vertikaler Richtung längs des Doppelpfeiles B, verschieblich ein Untergestell 7, von dem der Einfachheit halber nur zwei je eine Längsschiene bildende Träger gezeigt sind, die durch Querglieder (in Fig. 3 gezeigt) miteinander verbunden sind.

Dieses Untergestell wird mittels eines (nicht gezeigten) z. B. bekannten Antriebes in vertikaler Richtung auf- und abwärts bewegt und ist in vorgewählten Höhen bzw. Positionen feststellbar.

Auf der Oberseite der Träger läuft ein ebenfalls im wesentlichen horizontal ausgerichteter Rahmen 3, der sich auf den Trägern über Rollen 11 abstützt. Diese in Extrusionsrichtung verfahrbare Anordnung des Formwerkzeuges ist bekannt und allgemein üblich und daher nicht im Einzelnen erläutert. Auf der Oberseite dieses Trägers 3 ruhen zwei länglich-ovale Führungskanäle 2, in denen jeweils eine Matrizenfolge aus Matrizenhälften 1 in üblicher Weise umläuft. Jede dieser Matrizenhälften 1 weist mehrere nebeneinander angeordnete, voneinander unterschiedliche, vorzugsweise unterschiedlich große Form-Halbkanäle 4, 5 und 6 auf.

Ein (nicht gezeigter) Antrieb läßt die Matrizenhälften 1 in den beiden benachbarten Führungskanälen 2 jeweils gegenläufig umlaufen, wobei durch die Führungskanäle 2 die einzelnen Matrizenhälften 1 im mittleren Bereich des Rahmens mehrere Hohlformen bildend aneinandergelegt werden, wie dies aus Fig. 2 ersichtlich ist.

An der Einlaufseite der von den zusammenliegenden Matrizenhälften 1 gebildeten Arbeitsstrecke wird aus einem (nicht gezeigten) Extruderkopf ein noch formbares unterkalibriertes Rohr in jeweils einen, längs der genannten Strecke gebildeten, durchgehenden Formkanal eingeführt und tritt am Ende dieses Kanals verfestigt und entsprechend der Wandausbildung des Kanals geformt wieder aus.

In einer relativ zum Sockel 9 stationären Lage befindet sich der (nicht gezeigte) Extruderkopf mit einer Extruderdüse, die einen noch verformbaren Schlauch koaxial zu dem vor ihr befindlichen wandernden Formkanal ausstößt und in diesen einleitet.

Das Verschieben des auf den Rollen 11 laufenden Rahmens 3 längs der Träger 7 in Richtung des Doppelpfeiles A erleichtert das Einführen des vorextrudierten, noch formbaren Rohres in einen der Formkanäle zu Beginn der Fertigung.

Ferner ist der Extruderkopf durch Wegschieben des Rahmens 3 stets leicht zugänglich.

Bei der Betriebsumstellung wird die Extrusion in üblicher Weise stillgesetzt und das Untergestell 7 und damit der Rahmen 3 und die Matrizenhälften 1 in Richtung des Pfeiles B soweit angehoben bzw. abgesenkt, bis der dem nun gewünschten Produkt entsprechende Formkanal koaxial zum Extruderkopf vor diesem liegt. Dann wird der Extruder wieder in üblicher Weise angefahren.

In Fig. 3 ist das Untergestell 7 noch näher gezeigt ; wie ersichtlich, sind die beiden Längsträger durch Querglieder untereinander verbunden.

An der Unterseite des Rahmens 7 sind vier sich vertikal erstreckende Schraubenspindeln 12 befestigt, auf welchen jeweils eine Schraubenmutter 13 aufgeschraubt ist. Die Außenkante der jeweiligen Schraubenmutter 13 ist als Schneckenrad ausgebildet, und jeweils zwei in Längsrichtung der Vorrichtung miteinander fluchtende Hohlräder 13 sind durch eine gemeinsame Schneckenwelle 14 miteinander verbunden.

Am einen Ende sind die beiden Schneckenwellen 14 verlängert und jeweils mit einem Kettenrad 15 versehen, die beide über eine Kette 16 verbunden sind.

Eine der Schneckenspindeln 14 ist über das Kettenrad 15 hinaus noch verlängert und trägt einen Antriebsmotor 17, der seinerseits fest am Sockel 9 sitzt.

Die Zahnrad- bzw. Gewindepaarungen an den beiden Seiten des Untergestells 7 sind derart aufeinander abgestimmt, daß bei Drehung des Motors das Untergestell 7 gleichmäßig, also in stets horizontaler Lage, angehoben oder abgesenkt wird.

Dies kann dadurch erreicht werden, daß beispielsweise die Schraubenspindeln 12 und die diese anhebenden, rotierenden Muttern 13 auf der einen Seite der Maschine mit Rechtsgewinde und auf der anderen Seite mit Linksgewinde versehen sind. Es ist auch z. B. möglich, vier Spindeln mit gleichem Gewinde zu verwenden und stattdessen eine der beiden Schneckenwellen 14 rechtsgängig und die andere linksgängig auszubilden.

Die Muttern bzw. Schneckenräder 13 sind ihrerseits im Sockel 9 derart gelagert, daß sie nach oben und unten nicht ausweichen können.

An einem Querstück des Untergestells 7 ist ein überstehender Anschlag 18 angebracht, der dazu eingerichtet ist, mit diesem gegenüberliegend und übereinander am Sockel 9 angebrachten Mikroschaltern (nicht gezeigt) so in Eingriff zu gelangen, daß der über den Mikroschalter angeschlossene Antriebsmotor 17 jedesmal dann zum Stillstand gelangt, wenn der Anschlag 18 mit einem der Mikroschalter in Eingriff tritt.

Die Lage der Mikroschalter ist unabhängig voneinander in vertikaler Richtung einstellbar, so daß durch Einstellen des entsprechenden Mikroschalters die Anfahrhöhe eines jeden Formkanals 4, 5, 6 genau auf die Höhe des Extruderkopfes eingestellt werden kann.

**Patentansprüche**

1. Vorrichtung zum Herstellen von Kunststoffrohren unterschiedlicher Abmessungen mit querprofilierter — insbesondere quergerillter — Wandung
- mit zwei Folgen von Matrizenhälften (1) , die in einer gemeinsamen Ebene auf in sich geschlossenen endlosen Bahnen umlaufen,
- wobei die Matrizenhälften jeder Folge zu Ketten verbunden, von Ketten getragen oder unverbunden in Kanälen geführt sind, und
- wobei die beiden Folgen auf einem Teil ihrer endlosen Bahn längs einer geraden Arbeitsstrecke abstandslos nebeneinander herlaufen und dort zwischen sich eine Formkanalanordnung bilden, in der ein noch plastischer, gerade aus einer Extrusionsdüse ausgetretener Kunststoffschlauch durch ein von innen nach außen wirkendes Druckgefälle an die entsprechend profilierte Formkanalinnenwandung angeschmiegt und danach durch Abkühlen im Formkanal verfestigt wird, weiterhin
- mit einem Antrieb für die Umlaufbewegung der beiden Matrizenhälften folgen, und
- mit einer Kühleinrichtung für die beiden Matrizenhälftenfolgen,
- wobei ein die Führungsmittel (2) für die Matrizenhälften tragender Rahmen (3) quer zur. gemeinsamen Umlaufebene der Matrizenfolgen zwischen mehreren Positionen einstellbar ist, dadurch gekennzeichnet, daß
- die Matrizenhälften zwischen sich mehrere parallel zueinander verlaufende Formkanäle (4, 5, 6) mit unterschiedlichen, den herzustellenden

Kunststoffrohren entsprechenden Abmessungen bilden, von denen jeder aufgrund der Einstellbarkeit des Rahmens (3) vor die Exrudierdüse gebracht werden kann.

2. Vorrichtung nach Anspruch 1, dadurch gekennzeichnet, daß

- der Rahmen (3) von einem auf einem Untergestell (7) in Wanderrichtung der Hohlform verschiebbaren arretierbaren Wagen gebildet ist, auf dem die beiden Matrizenhälftenfolgen in einer horizontalen Ebene umlaufen, und daß

- das Untergestell (7) auf einem Sockel (9) vertikal verschiebbar gelagert und in den verschiedenen erforderlichen Höhen gegen Anschläge einstellbar ist.

3. Vorrichtung nach Anspruch 2, dadurch gekennzeichnet, daß

- die Anschläge in ihrer Höhe einstellbar sind.

4. Vorrichtung nach einem der Ansprüche 1 bis 3, dadurch gekennzeichnet, daß

- die Matrizenfolgen zwei bis fünf Formkanäle (4, 5, 6) bilden.

5. Vorrichtung nach einem der Ansprüche 1 bis 4, gekennzeichnet durch

- einen Kraftantrieb (17) zum Einstellen der Positionen der Führungsmittel (2) für die Matrizenhälften (1).

### Claims

1. An apparatus for the production of plastic tubings of different dimensions with cross-profiled — especially cross-grooved — walls, comprising

- two sequences of mould halves (1) circulating in endless paths on a common plane,

- the mould halves of each sequence being connected into chains, being supported by chains or being guided unconnected in channels, and

- the two sequences on a part of their endless paths running with no space between each other along a straight working segment and forming there between them a moulding-channel assembly in which a plastic tubing still with plasticity and just extruded from an extrusion nozzle is forced to hug the correspondingly profiled moulding channel inner wall by means of a pressure drop acting from the inside towards the outside and thereafter is solidified by cooling in the moulding channel, further

- comprising a drive for the circulating movement of the two mould-halve sequences, and

- comprising a cooling means for the two mould-halve sequences,

- a frame (3) supporting the guiding means (2) for the mould halves being adjustable transverse to the common circulating plane of the mould sequences between several positions, characterized in that

- the mould halves form between themselves several moulding channels (4, 5, 6) extending parallel to each other and having different dimensions corresponding to the plastic tubings to be produced, of which each can be brought to in front of the extrusion nozzle due to the adjustability of the frame (3) .

2. A device according to claim 1, characterized in that

- the frame (3) is formed of a lockable carriage shiftable on an underframe (7) in the direction of the path of the hollow mould, the two mould-halve sequences circulating on the carriage in a horizontal plane, and that

- the underframe (7) is mounted vertically shiftable on a base (9) and is adjustable against stoppers at the different, required heights.

3. A device according to claim 2, characterized in that

- the stoppers are adjustable in their heights.

4. A device according to one of the claims 1 to 3, characterized in that

- the mould sequences form two to five moulding channels (4, 5, 6).

5. A device according to one of the claims 1 to 4, characterized by

- a power drive (17) for the adjustment of the positions of the guiding means (2) for the mould halves (1) .

### Revendications

1. Dispositif pour la fabrication de tubes en matière plastique de différentes dimensions à paroi profilée transversalement — en particulier rainurée transversalement — comprenant :

- deux séries de demi-matrices (1) circulant dans deux circuits fermés sans fin situés dans un plan commun,

- les demi-matrices de chaque série étant reliées pour constituer des chaînes, supportées par des chaînes ou guidées dans des canaux sans être reliées entre elles,

- les deux séries circulant côte à côte, sans intervalle réciproque, sur une partie de leurs circuits sans fin le long d'un trajet utile rectiligne où elles constituent entre elles un système de canaux de moulage dans lesquels un tuyau de matière plastique venant juste de sortir d'une filière d'extrusion et encore à l'état plastique est appliqué, sous l'effet d'une baisse de pression agissant de l'intérieur vers l'extérieur, contre la paroi interne du canal de moulage, profilée de manière adéquate, puis solidifié par refroidissement dans le canal de moulage, et

- comprenant, en outre, un entraînement pour le mouvement circulaire des deux demi-matrices, et

- un dispositif de refroidissement pour les deux séries de demi-matrices,

- un cadre (3) portant les organes de guidage (2) pour les demi-matrices pouvant être réglé entre plusieurs positions dans le sens transversal par rapport au plan de circulation commun des séries de matrices, caractérisé en ce que

- les demi-matrices constituent entre elles une pluralité de canaux de moulage parallèles (4, 5, 6) avec des dimensions différentes en fonction des tubes en matière plastique à fabriquer, chaque canal de moulage pouvant être amené devant la filière d'extrusion du fait de la possibilité de réglage du cadre (3) .

2. Dispositif selon la revendication 1, caractérisé en ce que

- le cadre (3) est constitué par un chariot pouvant être bloqué, mobile dans le sens de la migration du moule creux et placé sur un châssis (7) , chariot sur lequel les deux séries de demi-matrices circulent dans un plan horizontal, et que

- le châssis (7) est positionné de manière mobile dans le sens vertical sur un socle (9) et réglé contre des butées aux divers niveaux nécessaires.

3. Dispositif selon la revendication 2, caractérisé en ce que

- les butées sont réglables en hauteur.

4. Dispositif selon l'une quelconque des revendications 1 à 3, caractérisé en ce que

- les séries de demi-matrices constituent deux à cinq canaux de moulage (4, 5, 6).

5. Dispositif selon l'une quelconque des revendications 1 à 4, caractérisé en ce qu'il comprend un moteur d'entraînement (17) pour le réglage des positions des organes de guidage (2) prévus pour les demi-matrices (1).

A

1

2

7

4 5

6

3

11 11

7

9

B

**Fig. 1**

1

4

5

6

**Fig. 2**

Fig. 3